# EUROPÄISCHE PATENTSCHRIFT

(11) **EP 1 102 375 B1**
(45) Veröffentlichungstag und Bekanntmachung des Hinweises auf die Patenterteilung: **20.07.2005**
(21) Anmeldenummer: 00120503.8
(22) Anmeldetag: 20.09.2000
(51) Int. Cl.: H02G 3/06, H02G 3/04

(54) **Leitungsführungskanal**
Cable ducting channel
Canalisation de conduite de câbles

(30) Priorität: 18.11.1999 DE 29920280 U
(43) Veröffentlichungstag der Anmeldung: 23.05.2001
(73) Patentinhaber: Tehalit GmbH, 67716 Heltersberg (DE)
(72) Erfinder: Nauerz, Uwe, 66851 Steinalben (DE); Wittmann, Jan, 67714 Waldfischbach (DE); Eberle, Udo, 67716 Heltersberg (DE); Ruf, Peter, 67714 Waldfischbach (DE); Beck, Dieter, 66978 Clausen (DE)
(74) Vertreter: Patentanwälte Möll und Bitterich

(56) Entgegenhaltungen:
- EP-A- 0 933 851
- US-A- 4 602 124
- US-A- 5 753 855

## Beschreibung

Die Erfindung betrifft Leitungsführungskanäle gemäß dem Oberbegriff des Anspruchs 1.

Während das Verlegen von Leitungsführungskanälen in gerade Linie problemlos und schnell von statten geht, bereiten Ecken, gleichgültig ob es sich dabei um Innenecken, Außenecken, Flachecken oder Abzweigungen handelt, Probleme. In den Ecken muss der Installateur die Kanalenden auf Gehrung schneiden, passgenau stoßen und befestigen. Auch bei exaktester Arbeit bleiben meist unschöne Schnittkanten sichtbar. Die Kanalhersteller bieten daher Abdeckprofile an, die diese Schnittkanten kaschieren. Dabei handelt es sich entweder um Spritzgußteile oder um Kanalunterteile, die werksseitig zugeschnitten und zusammengeklebt wurden. Diese Abdeckprofile werden mit Hilfe von Rast-, Schnapp- oder Steckverbindungen mit dem Kanaleck verbunden.

Vorgefertigte starre Abdeckprofile sind nur dann problemlos anwendbar, wenn der Winkel der Ecke möglichst exakt 90° beträgt. Nicht selten weichen jedoch die Winkel der Raumecken, in denen die Leitungsführungskanäle verlegt werden, vom rechten Winkel ab. In diesen Fällen müssen die von Kanalherstellern auch angebotenen verstellbaren Abdeckprofile eingesetzt werden oder der Installateur muss die Ecke wieder In Handarbeit herstellen.

Leitungsführungskanäle werden mit unterschiedlichen Querschnitten angeboten. Aus Rationalislerungsgründen werden die Kanäle dabei entweder mit gleicher Breite und unterschiedlichen Höhen oder mit gleicher Höhe und unterschledlichen Breiten produziert.

Da die Abdeckprofile exakt passen müssen, um ihre Kaschlerfunktion erfüllen zu können, muss für jeden Kanal ein eigener Satz von Abdeckprofilen produziert, gelagert, verschickt, bestellt und montiert werden. Die Erfahrung zeigt, dass gerade bei der Bestellung oftmals Fehler gemacht werden. Diese Situation ist sowohl für den Hersteller als auch für den Installateur unbefriedigend.

Aus der 5,753,855 sind Formtelle in Form eines T oder eines Bogens bekannt, die aus einem an der Wand zu befestigenden Unterteil und einem aufrastbaren Oberteil bestehen. Die Unterteile besitzen bodenseitig angeordnete Rücksprünge, die Oberteile mit diesen Rücksprüngen korrespondierende Haltenasen. Auf diese Weise sitzen die Oberteile fest auf ihren Unterteilen. Nachtellig ist allerdings, dass nicht nur die Oberteile sondern auch die Unterteile separat gefertigt, gelagert, bestellt, angellefert und montiert werden müssen.

Aus der EP 933 851 A sind Abdeckprofile bekannt, die die Stöße von nicht auf Gehrung geschnittenen Kabelkanälen kaschieren. Die Abdeckprofile besitzen an ihrer Oberseite innen Halteprofile, die mit den Deckelhalteprofilen der Kanalunterteile verrasten. Die Seitenschenkel der Abdeckprofile sind gerade gestreckt und kaschieren die Seitenwände der Kanalunterteile bis zum Boden. Diese Abdeckprofile benötigen keine separaten Unterteile; da sie jedoch mit den Deckelhalteprofilen der Kanalunterteile verrastet werden, muss für jeden Kanaltyp ein gesonderter Satz von Abdeckprofilen gefertigt, gelagert, bestellt, transportiert und montiert werden. Das ist unbefriedigend.

Der vorliegenden Erfindung liegt, die Aufgabe zugrunde, hier Abhilfe zu schaffen und Profile anzugeben, die auch bei Ecken, deren Winkel in den durch die Konstruktion vorgegebenen Grenzen von 90° abweicht, verwendet werden können, die schnell montiert und demontiert sind, die fest sitzen, dabei stets ein ästhetisch einwandfreies Bild bieten und für Kanäle mit gleicher Höhe aber unterschiedlichen Breiten und/oder mit gleicher Breite aber unterschiedlichen Höhen verwendbar sind.

Diese Aufgabe wird gelöst durch einen Leitungsführungskanal mit den Merkmalen des Anspruchs 1. Vorteilhafte Ausgestaltungen der Erfindung ergeben sich aus den abhängigen Ansprüchen.

Die Vorteile der Erfindung sind augenfällig. Sobald das Kanalunterteil montiert Ist, wirkt der Rücksprung zwischen Boden und Seitenwand des Kanalunterteils als Schattenfuge mit der bekannten ästhetischen Wirkung. Hauptzweck dieser Rücksprünge ist jedoch, Im Zusammenwirken mit den an den Schenkeln angeformten Nasen den passgenauen und sicheren Halt der Abdeckprofile am Kanal zu gewährleisten. Dieser passgenaue und sichere Halt ermöglicht eine größere Gestaltungsfreiheit bei der Formgebung, Insbesondere des Stegs, der so breit ausgeführt werden kann, dass er sogar den Stoß zweier ohne Gehrungsschnitt verlegter Kanalabschnitte kaschiert, was die Arbeit des Installateurs verständlicherweise deutlich erleichtert und beschleunigt.

Anhand der Zeichnung soll die Erfindung in Form von Ausführungsbeispielen näher erläutert werden. Es zeigen
- Fig. 1: einen Querschnitt durch einen Leitungsführungskanal,
- Fig. 2: die perspektivische Darstellung eines Innenecks mit einem ersten Abdeckprofil,
- Fig. 3: die perspektivische Darstellung eines Innenecks mit einem zweiten Abdeckprofil,
- Fig. 4: die perspektivische Darstellung eines Innenecks mit einem dritten Abdeckprofil,
- Fig. 5: die perspektivische Darstellung eines Außenecks mit einem vierten Abdeckprofil vor dessen Montage,
- Fig. 6: das Außeneck der Fig. 5 mit montiertem Abdeckprofil,
- Fig. 7: die perspektivische Darstellung eines Außenecks mit einem fünften Abdeckprofil,
- Fig. 8: die perspektivische Darstellung eines Flachecks mit einem sechsten Abdeckprofil vor dessen Montage,
- Fig. 9: das Flacheck der Fig. 8 mit montiertem Abdeckprofil,
- Fig. 10: die perspektivische Darstellung eines T-Abzweigs mit einem siebten Abdeckprofil,
- Fig. 11: die perspektivische Darstellung einer Kanalkreuzung mit zwei Abdeckprofilen nach Fig. 10,
- Fig. 12: die perspektivische, vergrößerte Darstellung des zweiten Abdeckproflls als Sprengbild,
- Fig. 13: das Abdeckprofil der Fig. 12 teilweise teleskopiert und
- Fig. 14: das Abdeckprofil der Fig. 12 und 13 ganz teleskopiert.

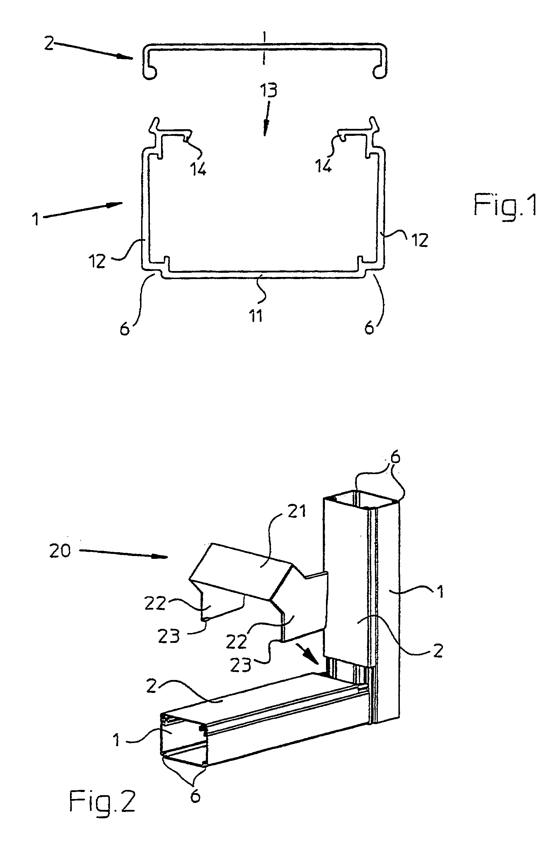

Fig. 1 zeigt einen Querschnitt durch einen Leitungsführungskanal, bestehend aus einem Kanaluntertell 1 und einem Deckel 2. Das Kanalunterteil 1 besitzt einen etwa rechteckigen Querschnitt, gebildet durch einen Boden 11, zwei Seitenwände 12 und zwei Deckelhalteprofile 14, die eine offene Vorderseite 13 begrenzen. Der Deckel 2 besitzt mit den Deckelhalteprofilen 14 korrespondierende Halteprofile.

Am Übergang zwischen Boden 11 und Seltenwand 12 besitzt das Kanalunterteil 1 Rücksprünge 6, dle zunächst als Schattenfuge wirken und klelnere Unebenheiten der Wandfläche, an der das Kanalunterteil 1 später befestigt wird, optisch ausglelchen. Weitere Funktionen der Rücksprünge 6 werden anhand der nachfolgenden Figuren erläutert.

Fig. 2 zeigt eine perspektivische Darstellung zweier Kanalabschnitte 1, 2, die unter Bildung eines Innenecks verlegt sind. Man beachte, dass die Kanalabschnitte 1, 2 stumpf, d.h. ohne Gehrung gestoßen sind. Die Deckel 2 sind mit gegenseitigem Abstand montiert.

Zur Kaschierung der Stoßstelle des Innenecks ist ein erstes Abdeckprofil 20 vorgesehen Dieses hat eine U-Form, gebildet durch zwei Schenkel 22 und einen diese verbindenden flachen, breiten Steg 21. Die Schenkel 22 besitzen eine quadratische Grundform. Der Steg 21 besitzt hierzu eine diagonale Orientierung, so dass nach dem Aufstecken des Abdeckprofils 20 auf die Kanalabschnitte 1, 2 der Steg 21 zu den beiden Deckeln 2 jeweils einen Winkel von ca. 45° einschließt. Der Stoß wird auch dann einwandfrei kaschiert, wenn die Kanalabschnitte 1, 2 nicht Im exakt rechten Winkel zueinander verlegt sind.

Für den einwandfreien Halt des Abdeckprofils 20 an den Kanalabschnitten 1, 2 sind an der Innenselte der Schenkel 22 angeformte Nasen 23 verantwortlich. Diese rasten in die Rücksprünge 6 des Kanalunterteils 1 ein, so dass sich eine formschlüssige Verbindung einstellt.

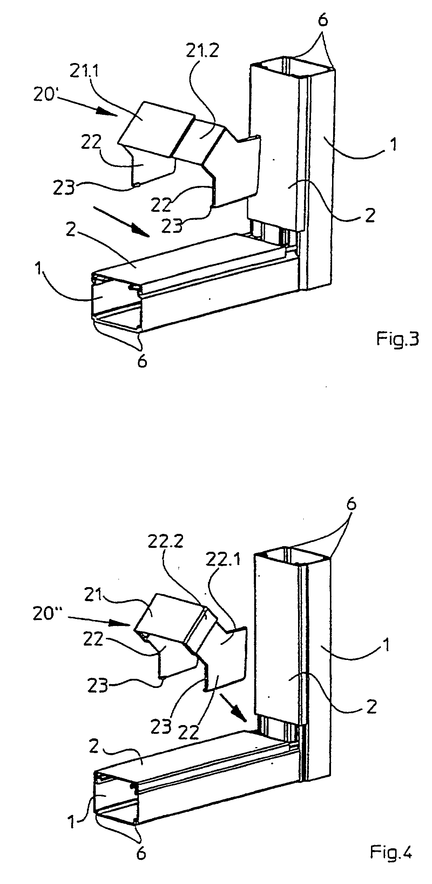

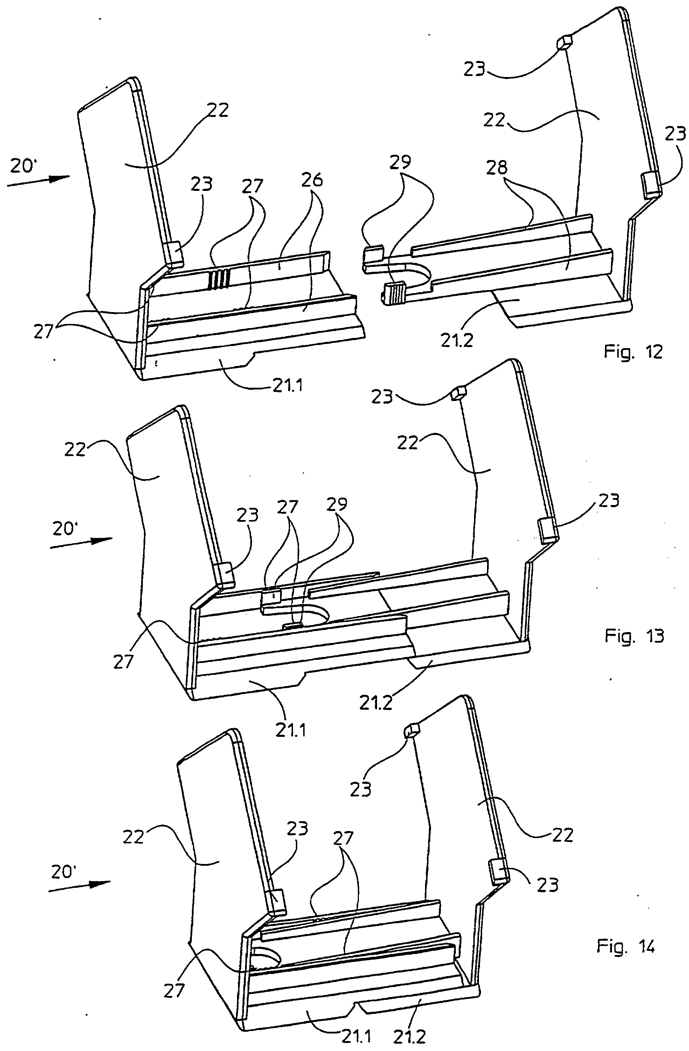

Fig. 3 zeigt in perspektivischer Darstellung wiederum ein Inneneck zweier stumpf gestoßener Kanalabschnitte 1, 2. Zur Kaschierung des Stoßes ist ein zweites Abdeckprofil 20' vorgesehen. Der die beiden Schenkel 22 verbindende Steg besteht aus zwei Teilen 21.1, 21.2. Diese sind gegeneinander teleskopierbar, was anhand der Fig. 12 bis 14 noch näher erläutert werden soll. Dank des teleskopierbaren Stegs 21.1, 21.2 kann das Abdeckprofil 20' für unterschiedliche breite Leitungsführungskanäle 1, 2 verwendet werden.

Fig. 4 zeigt ein drittes Abdeckprofil 20" zur Kaschierung der als Inneneck verlegten Kanalabschnitte 1, 2. In diesem Ausführungsbeispiel befindet sich zwischen der Leiste 21 und den Schenkeln 22 eine zweiteilige Verbindungsleiste 22.1, 22.2. Beide Teile sind gegeneinander teleskopierbar. Dadurch ist dieses Abdeckprofil 20" mit unterschiedlich hohen Leitungsführungskanälen verwendbar.

Falls gewünscht lassen sich die Verstellmöglichkeiten der Fig. 3 und 4 auch kombinieren.

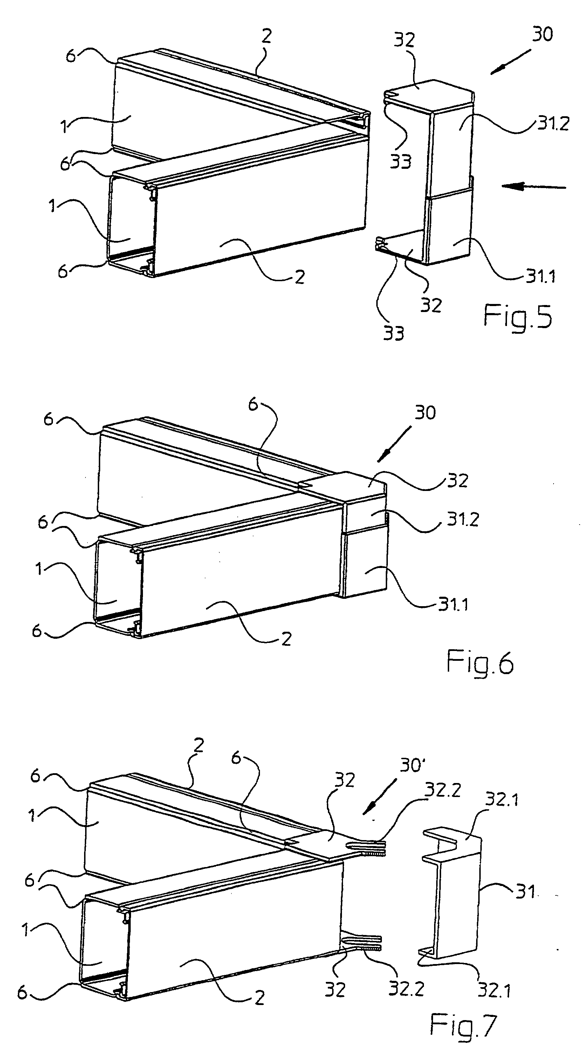

Fig. 5 zeigt die perspektivische Darstellung zweier als Außeneck verlegter Kanalabschnitte 1, 2. Auch in diesem Fall erfolgt die Verlegung ohne Gehrungsschnitt.

Zur Kaschlerung des Stoßes ist ein viertes Abdeckprofil 30 vorgesehen. Auch dieses besitzt eine U-Form mit zwei eine quadratische Grundform aufweisenden Schenkeln 32 und einem diese verbindenden winkelförmigen, breiten und aus zwei gegeneinander teleskopierbaren Teilen 31.1, 31.2 bestehenden Steg. An der Innenseite der Schenkel 32 vorgesehene Nasen 33 korrespondieren mit den Rücksprüngen 6 an den Kanalunterteilen 1.

Während Fig. 5 die Situation vor der Montage des Abdeckprofils 30 darstellt, zeigt Fig. 6 die Situation nach der Montage. Die beiden Stegteile 31.1, 31.2 sind zusammengeschoben, das Abdeckprofil 30 sitzt unverlierbar an den Kanalabschnitten 1, 2.

Wie die Fig. 5 und 6 erkennen lassen, sind die Außenkanten des zweiteiligen Steges 31 .1, 31.2 und der Schenkel 32 angefast. Dies spart Platz und gibt ein gefälliges Bild. Anstelle einer Anfasung kann auch eine Abrundung vorgenommen werden.

Fig. 7 zeigt die perspektivische Darstellung eines aus zwei Kanalabschnitten 1, 2 gebildeten Außenecks, wobei als Abdeckprofil 30' eine fünfte Ausführungsform Verwendung findet. In diesem Fall sind zwischen den Schenkeln 32 und dem breiten Steg 31 zweiteilige Verbindungsleisten 35.1, 35.2 vorgesehen, die gegeneinander teleskopierbar sind. Dadurch ist eine Anpassung an Kanäle 1, 2 mit unterschiedlichen Höhen möglich. Der Steg 31 hat einen U-förmigen Querschnitt, so dass der Stoß auch dann einwandfrei kaschiert wird, wenn die Kanalabschnitte 1, 2 nicht im exakt rechten Winkel zueinander verlegt sind.

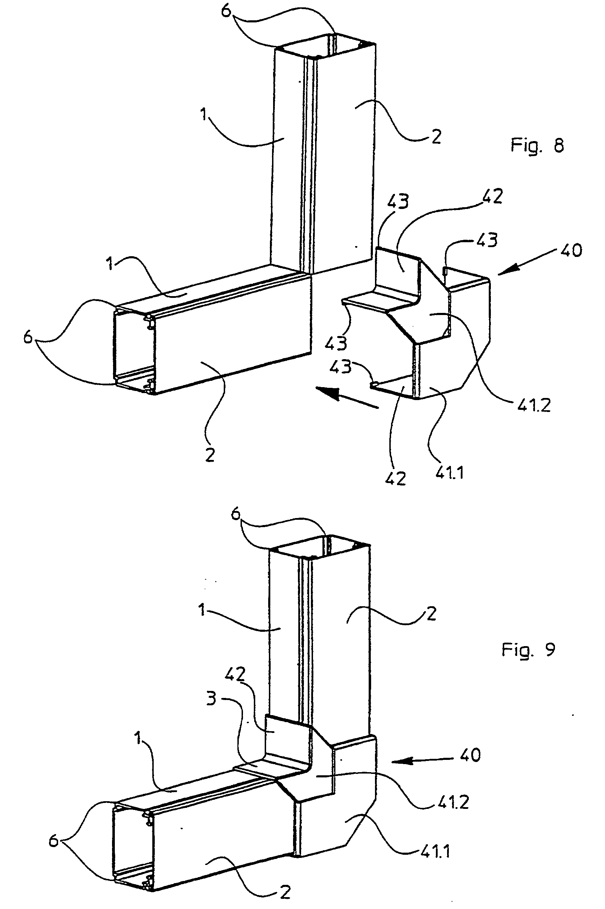

Fig. 8 zeigt die perspektivische Darstellung zweier als Flacheck verlegter Kanalabschnitte 1, 2. Auch diese sind ohne Gehrungsschnitt verlegt. Zur Kaschierung des Stoßes ist ein sechstes Abdeckprofil 40 vorgesehen, bestehend aus zwei Schenkeln 42.1, 42.2, verbunden durch einen breiten zweiteiligen Steg 41.1, 41.2, dessen beide Teile gegeneinander teleskopierbar sind. Die beiden Schenkel 42.1, 42.2 sind den Kanalabschnitten 1, 2 entsprechend winkelförmig ausgebildet. Die Innenkante des inneren Schenkels 42.1 und die Außenkante des äußeren Schenkels 42.2 sind angefast. Die Schenkel 42.1, 42.2 tragen Nasen 43, die mit den Rücksprüngen 6 am Kanalunterteil 1 korrespondieren.

Während Fig. 8 die Situation vor der Montage des Abdeckprofils 40 zeigt, zeigt Fig. 9 die Situation nach der Montage. Dank der Teleskopierbarkeit des Stegs 41.1, 41.2 ist eine Anpassung an unterschiedlich breite Leitungsführungskanäle 1, 2 möglich.

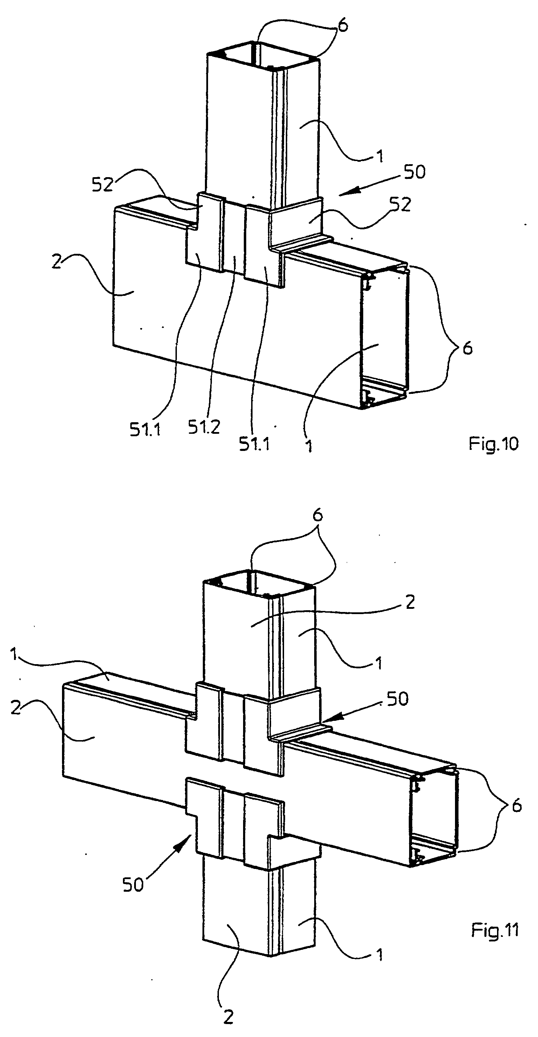

Fig. 10 zeigt die perspektivische Darstellung einer rechtwinkligen Kanalabzweigung. Der Stoß zwischen den Kanalabschnitten 1, 2 ist mit einem siebten Abdeckprofil 50 kaschlert. Dieses besitzt zwei Schenkel 52.1, 52.2, die den Kanalabschnitten 1, 2 entsprechend einen winkelförmigen Querschnitt besitzen, und einen diese verbindenden dreiteiligen Steg 51.1, 51.2. Die Stegteile sind gegeneinander teleskopierbar, so dass das Abdeckprofil 50 mit unterschiedlich breiten Kanälen 1, 2 verwendbar ist.

Fig. 11 zeigt die perspektivische Darstellung einer Kreuzung zweier Leitungsführungskanäle 1, 2. Beide Stoßstellen sind mit Abdeckprofilen 50 kaschiert.

Die Flg. 12,13 und 14 zeigen in perspektivischer Darstellung das breitenversteillbare Abdeckprofil 20' zur Kaschierung eines Innenecks in drei unterschiedlichen Positionen.

Fig. 12 zeigt das Abdeckprofil 20' vor dem Teleskopieren. Auf der Innenseite des zweiteiligen Steges 21.1, 21.2 erkennt man U-förmige, ineinander gleitende Führungsprofile 26, 28. Das äußere U-Profil 26 besitzt bereichsweise Innenverzahnungen 27. Das innenliegende U-Profil 28 besitzt an seiner Spitze zwei Außenverzahnungen 29, die gegeneinander federn können.

Fig. 13 zeigt die Situation, nachdem der Steg 21.1, 21.2 bis zur ersten Verzahnung 27 einteleskopiert wurde. In dieser Position kann das Abdeckprofil 20' mit einem breiten Leitungsführungskanal verwendet werden.

Fig. 14 zeigt die Situation, nachdem der Steg 21.1, 21.2 maximal zusammengeschoben wurde. In dieser Position ist das Abdeckprofil 20' für einen schmalen Leitungsführungskanal geeignet.

## Patentansprüche

1. Leitungsführungskanal, umfassend
- ein Kanalunterteil (1) mit
-- einem Boden (11),
-- zwei Seltenwänden (12)
-- und einer offenen Vorderseite (13), die von zwei Deckelverschlussprofilen (14) begrenzt ist,
- einen die offene Vorderseite (13) verschließenden, auf die Deckelverschlussprofile (14) aufrastbaren Deckel (2),
- und wenigstens ein Abdeckprofil (20, 30, 40, 50), welches den Stoß zweler im Eck zueinander verlegter Kanalabschnitte (1, 2) kaschiert,
- das Kanalunterteit (1) besitzt am Übergang vom Boden (11) zur Seitenwand (12) über seine ganze Länge einen Rücksprung (6),
- das Abdeckprofil (20, 20', 20", 30, 40, 50) besitzt eine U-Form mit
-- einem Steg (21, 31, 41, 51)
-- und zwei Schenkeln (22, 32, 42, 52),
**gekennzeichnet durch** die Merkmale:
die Schenkel (22, 32, 42, 52) besitzen an ihrer Innenseite angeformte Nasen (23, 33, 43, 53), die mit den Rücksprüngen (6) korrespondieren,
- der Steg (21, 31, 41, 51) besteht aus zwei Teilen (21.1, 21.2),
- beide Teile sind gegeneinander teleskopierbar.

2. Leitungsführungskanal nach Anspruch 1, **gekennzeichnet durch** die Merkmale:
- die Schenkel (22, 32, 42, 52) bestehen aus zwei Teilen (22.1, 22.2; 32.1, 32.2),
- beide Teile sind gegeneinander teleskopierbar.

3. Leitungsführungskanal nach Anspruch 2, **gekennzeichnet durch** das Merkmal:
- zwischen dem Steg (21) und den Schenkeln (22) befindet sich eine zweiteillge
Zwischenleiste,
- beide Teile der Zwischenleiste sind gegeneinander teleskopierbar.

4. Leitungsführungskanal nach einem der Ansprüche 1 bis 3, **gekennzeichnet durch** das Merkmal:
- beide Teile (21.1, 21.2) besitzen kooperierende, federnde Rastverzahnungen (26, 27).

5. Leitungsführungskanal nach einem der Ansprüche 1 bis 4, **gekennzeichnet durch** die Merkmale:
- der Deckel (2) des Kanals ist gewölbt,
- die aus zwei Teilen (21.1, 21.2) bestehende teleskoplerbare Leiste (21) ist ebenfalls gewölbt,
- die Seitenwände (22) sind hochelastisch.

6. Leitungsführungskanal nach einem der Ansprüche 1 bis 5, **gekennzeichnet durch** die Merkmale:
- das Abdeckprofil (20) ist ein Inneneck,
- die Schenkel (22) bilden ein Quadrat,
- der Steg (21) ist eine flache Leiste.

7. Leitungsführungskanal nach Anspruch 6, **gekennzeichnet durch** das Merkmal:
- der Steg (21) schließt mit den Kanalabschnitten (1, 2) Winkel von ca. 45° ein.

8. Leitungsführungskanal nach einem der Ansprüche 1 bis 5, **gekennzeichnet durch** die Merkmale:
- das Abdeckprofil (30) ist ein Außeneck,
- die Schenkel (32) bilden ein Quadrat,
- der Steg (31) besitzt einen winkelförmigen Querschnitt, passend zum Eck der Kanalabschnitte (1, 2).

9. Leitungsführungskanal nach Anspruch 8, **gekennzeichnet durch** das Merkmal:
- der Querschnittswinkel des Stegs (31) ist kleiner als 90°.

10. Leitungsführungskanal nach Anspruch **8**, oder **9**, **gekennzeichnet durch** das Merkmal:
- die Außenkante von Steg (31) und Schenkel (32) ist angefast oder abgerundet.

11. Leitungsführungskanal nach einem der Ansprüche 1 bis 5, **gekennzeichnet durch** die Merkmale:
- das Abdeckprofil (40) ist ein Flacheck,
- der Steg (41) ist ein Quadrat,
- die Schenkel (42.1, 42.2) besitzen einen winkelförmigen Querschnitt, passend zum Eck der Kanalabschnitte (1, 2).

12. Leitungsführungskanal nach Anspruch 11, **gekennzeichnet durch** das Merkmal:
- die Außenkante von Steg (41) und äußerem Schenkel (42.2) ist angefast oder abgerundet.

13. Leitungsführungskanal nach einem der Ansprüche 1 bis 5, **gekennzeichnet durch** die Merkmale:
- das Abdeckprofil (50) Ist ein Abzweigeck,
- der Steg (51) ist eine flache Leiste,
- die Schenkel (52) besitzen jeweils einen winkelförmigen Querschnitt, passend zu den Ecken der Kanalabschnitte (1, 2).

14. Leitungsführungskanal nach Anspruch 13, **gekennzeichnet durch das** Merkmal:
- die Innenkante von Steg (41) und innerem Schenkel (42.1) ist angefast oder abgerundet.

## Claims

1. Wiring trunking, comprising
- a trunking lower part (1) with
-- a bottom (11),
-- two side walls (12)
-- and an open front (13) which is bounded by two cover closure profiles (14),
- a cover (2) which closes the open front (13) and can lock onto the cover closure profiles (14),
- and at least one covering profile (20, 30, 40, 50) which covers the joint of two trunking portions (1, 2) fitted cornerwise relative to one another,
- the trunking lower part (1) has a recess (6) at the transition from the bottom (11) to the side wall (12) over its entire length,
- the covering profile (20, 20', 20", 30, 40, 50) is U-shaped with
-- a crosspiece (21, 31, 41, 51)
-- and two limbs (22, 32, 42, 52),
**characterised by** the features:
- the limbs (22, 32, 42, 52) have lugs (23, 33, 43, 53) which are formed onto their inside and correspond to the recesses (6),
- the crosspiece (21, 31, 41, 51) consists of two parts (21.1, 21.2),
- the two parts are telescopic relative to one another.

2. Wiring trunking according to Claim 1, **characterised by** the features:
- the limbs (22, 32, 42, 52) consist of two parts (22.1, 22.2; 32.1, 32.2),
- the two parts are telescopic relative to one another.

3. Wiring trunking according to Claim 2, **characterised by** the features:
- a two-part intermediate strip is located between the crosspiece (21) and the limbs (22),
- the two parts of the intermediate strip are telescopic relative to one another.

4. Wiring trunking according to any one of Claims 1 to 3,
**characterised by** the feature:
- the two parts (21.1, 21.2) have co-operating resilient locking tooth systems (26, 27)

5. Wiring trunking according to any one of Claims 1 to 4,
**characterised by** the features:
- the cover (2) of the trunking is arched,
- the telescopic strip (21) consisting of two parts (21.1, 21.2) is likewise arched,
- the side walls (22) are highly elastic.

6. Wiring trunking according to any one of Claims 1 to 5,
**characterised by** the features:
- the covering profile (20) is an internal corner,
- the limbs (22) form a square,
- the crosspiece (21) is a flat strip.

7. Wiring trunking according to Claim 6, **characterised by** the feature:
- the crosspiece (21) forms angles of approximately 45° with the trunking portions (1, 2).

8. Wiring trunking according to any one of Claims 1 to 5,
**characterised by** the features:
- the covering profile (30) is an external corner,
- the limbs (32) form a square,
- the crosspiece (31) has an angular cross section, which matches the corner of the trunking portions (1, 2).

9. Wiring trunking according to Claim 8, **characterised by** the feature:
- the cross-sectional angle of the crosspiece (31) is less than 90°.

10. Wiring trunking according to Claim 8 or 9, **characterised by** the feature:
- the outer edge of the crosspiece (31) and the limb (32) is bevelled or rounded.

11. Wiring trunking according to any one of Claims 1 to 5,
**characterised by** the features:
- the covering profile (40) is a flat corner,
- the crosspiece (41) is a square,
- the limbs (42.1, 42.2) have angular cross section, which matches the corner of the trunking portions (1, 2).

12. Wiring trunking according to Claim 11, **characterised by** the feature:
- the outer edge of the crosspiece (41) and the outer limb (42.2) is bevelled or rounded.

13. Wiring trunking according to any one of Claims 1 to 5,
**characterised by** the features:
- the covering profile (50) is a branch corner,
- the crosspiece (51) is a flat strip,
- the limbs (52) each have an angular cross section, which matches the corners of the trunking portions (1, 2).

14. Wiring trunking according to Claim 13, **characterised by** the feature:
- the inner edge of the crosspiece (41) and the inner limb (42.1) is bevelled or rounded.

## Revendications

1. Canalisation de conduite de câbles comprenant
- une partie inférieure de canalisation (1) avec
-- un fond (11),
-- deux parois latérales (12)
-- et une face avant ouverte (13) qui est limitée par deux profilés de fixation de couvercle (14),
- un couvercle (2) fermant la face avant ouverte (13), encliquetable sur les profilés de fixation de couvercle (14),
- et au moins un profilé de recouvrement (20, 30, 40, 50) qui cache la jointure de deux sections de canalisation (1, 2) posées à angle l'une par rapport à l'autre,
- la partie inférieure de canalisation (1) possédant sur toute sa longueur un retrait (6) à la jonction du fond (11) et de la paroi latérale (12),
- le profilé de recouvrement (20, 20', 20", 30, 40, 50) possédant une forme en U avec
-- une base (21, 31, 41, 51)
-- et deux branches (22, 32, 42, 52),
**caractérisée par le fait que**
- les branches (22, 32, 42, 52) possèdent sur leur face intérieure des ergots rapportés (23, 33, 43, 53) qui correspondent aux retraits (6),
- la base (21, 31, 41, 51) est composée de deux parties ou pièces (21.1, 21.2),
- les deux parties ou pièces sont télescopiques l'une par rapport à l'autre.

2. Canalisation de conduite de câbles selon la revendication 1, **caractérisée par le fait que**
- les branches (22, 32, 42, 52) sont composées de deux parties (22.1, 22.2 ; 32.1, 32.2),
- les deux parties sont télescopiques l'une par rapport à l'autre.

3. Canalisation de conduite de câbles selon la revendication 2, **caractérisée par le fait que**
- une entretoise en deux parties se trouve entre la base (21) et les branches (22),
- les deux parties de l'entretoise sont télescopiques l'une par rapport à l'autre.

4. Canalisation de conduite de câbles selon l'une des revendications 1 à 3, **caractérisée par le fait que**
- les deux parties (21.1, 21.2) possèdent des dentures encliquetables (26, 27) élastiques qui coopèrent.

5. Canalisation de conduite de câbles selon l'une des revendications 1 à 4, **caractérisée par le fait que**
- le couvercle (2) de la canalisation est bombé,
- l'entretoise télescopique (21) composée de deux parties (21.1, 21.2) est également bombée,
- les parois latérales (22) sont à haute élasticité.

6. Canalisation de conduite de câbles selon l'une des revendications 1 à 5, **caractérisée par le fait que**
- le profilé de recouvrement (20) est un angle interne,
- les branches (22) forment un carré,
- la base (21) est une entretoise plate.

7. Canalisation de conduite de câbles selon la revendication 6, **caractérisée par le fait que**
- la base (21) inclut avec les sections de canalisation (1, 2) des angles d'environ 45°.

8. Canalisation de conduite de câbles selon l'une des revendications 1 à 5, **caractérisée par le fait que**
- le profilé de recouvrement (30) est un angle externe,
- les branches (32) forment un carré,
- la base (31) possède une section angulaire adaptée à l'angle des sections de canalisation (1, 2).

9. Canalisation de conduite de câbles selon la revendication 8, **caractérisée par le fait que**
- l'angle de section de la base (31) est inférieur à 90°.

10. Canalisation de conduite de câbles selon la revendication 8 ou 9, **caractérisée par le fait que**
- l'arête extérieure de la base (31) et des branches (32) est chanfreinée ou arrondie.

11. Canalisation de conduite de câbles selon l'une des revendications 1 à 5, **caractérisée par le fait que**
- le profilé de recouvrement (40) est un angle plat,
- la base (41) est un carré,
- les branches (42.1, 42.2) possèdent une section angulaire adaptée à l'angle des sections de canalisation (1, 2).

12. Canalisation de conduite de câbles selon la revendication 11, **caractérisée par le fait que**
- l'arête extérieure de la base (41) et de la branche extérieure (42.2) est chanfreinée ou arrondie.

13. Canalisation de conduite de câbles selon l'une des revendications 1 à 5, **caractérisée par le fait que**
- le profilé de recouvrement (50) est un angle de dérivation,
- la base (51) est une entretoise plate,
- les branches (52) possèdent chacune une section angulaire adaptée aux angles des sections de canalisation (1, 2).

14. Canalisation de conduite de câbles selon la revendication 13, **caractérisée par le fait que**
- l'arête intérieure de la base (41) et de la branche intérieure (42.1) est chanfreinée ou arrondie.
